# EUROPÄISCHE PATENTSCHRIFT

(11) **EP 2 553 475 B1**
(45) Veröffentlichungstag und Bekanntmachung des Hinweises auf die Patenterteilung: **22.10.2014**
(21) Anmeldenummer: 11704437.0
(22) Anmeldetag: 10.02.2011
(51) Int. Cl.: G01P 3/44, F16C 41/00

(54) **LAGERBAUGRUPPE MIT LAGER**
BEARING ASSEMBLY COMPRISING A BEARING
MODULE DE PALIER COMPORTANT UN PALIER

(30) Priorität: 29.03.2010 DE 102010013213
(43) Veröffentlichungstag der Anmeldung: 06.02.2013
(73) Patentinhaber: Schaeffler Technologies GmbH & Co. KG, 91074 Herzogenaurach (DE)
(72) Erfinder: HEIM, Jens, 97493 Bergrheinfeld (DE); WILM, Bernhard, 97720 Nüdlingen (DE)
(86) Internationale Anmeldenummer: PCT/EP2011/051973
(87) Internationale Veröffentlichungsnummer: WO 2011/120733

(56) Entgegenhaltungen:
- EP-A2- 0 822 413
- WO-A2-03/071284
- US-B1- 6 231 241
- US-B1- 6 457 869

## Beschreibung

### Gebiet der Erfindung

Die Erfindung betrifft eine Lagerbaugruppe gemäß Anspruch 1 zur Lagerung eines drehenden Bauteils insbesondere eines Rads in einem Kraftfahrzeug mit einem Achszapfen, mit einem einen fest angeordneten Innenring und einen mit einer Drehzahl drehenden Außenring enthaltendes Lager und mit einem Sensorelement, wobei das Sensorelement und der Innenring des Lagers auf dem Achszapfen aufgenommen sind.

### Hintergrund der Erfindung

Gattungsgemäße Lagerbaugruppen werden beispielsweise als Radlagereinrichtungen in Kraftfahrzeugen, insbesondere Nutzfahrzeugen wie Lastkraftwagen, Omnibussen und dergleichen eingesetzt. Dabei ist auf einem Achszapfen ein Lager wie Radlager mit einem Innenring und einem Außenring sowie zwischen diesen abwälzenden Wälzkörpern wie beispielsweise Kegelrollen, Nadeln oder Kugeln angeordnet. Dabei ist der Innenring beispielsweise auf den Achszapfen aufgeschrumpft und gegebenenfalls gegen Durchrutschen mittels eines Stifts oder Splints verdrehgesichert. Die Toleranz einer derartigen Verdrehsicherung ist vergleichsweise großzügig ausgelegt.

In die Lagerbaugruppe kann ein Sensorelement integriert sein, das zur Überwachung des Radlagers oder der Erfassung der Raddrehzahl dienen kann. Hierzu ist aus der DE 10 2008 023 588 A1 ein Radlager bekannt, bei dem mit dem Achszapfen ein Sensorelement feststehend verbunden ist, das die Drehzahl eines mit dem Außenring drehenden Geberrings erfasst. Die Toleranzkette zwischen Sensorelement und dem Geberring erstreckt sich dabei von der das Sensorelement aufnehmenden Hülse über den Achszapfen, die Laufbahnen der Wälzkörper, die Wälzkörper zum Außenring und von dort über eine Aufnahmeverbindung zum Geberring.

Der Innenring von Lagern wie Radlagern ist gemäß dem Stand der Technik gegenüber dem Achszapfen mittels in eine Nut der Zylinderfläche des Innenrings eingreifenden Keilen oder Passfedern verdrehgesichert. Neben einem erhöhten Kostenaufwand wegen des zusätzlichen Bauteils ist der Innenring an dieser Nut im Bereich der Zylinderfläche besonders hoch belastet.

Die EP 0 822 413 A2 offenbart eine Lageranordnung mit einem Achszapfen und einem Radlager mit einem am Achszapfen aufgepressten Innenring und einem gegenüber diesem verdrehbar angeordneten Außenring sowie einer Drehzahlerfassungseinrichtung mit einem am Außenring fest angeordneten Geberring und einem auf dem Achszapfen aufgenommenen Sensorelement. Das Sensorelement ist mittels eines Blechhalters gegenüber dem Innenring verdrehgesichert.
\

Die US 6 457 869 B1 offenbart eine Lageranordnung mit einem Achszapfen und einem Radlager mit einem am Achszapfen aufgepressten Innenring und einem gegenüber diesem verdrehbar angeordneten Außenring sowie einer Drehzahlerfassungseinrichtung mit einem am Außenring fest angeordneten Geberring und einem auf dem Achszapfen aufgenommenen Sensorelement. Das Sensorelement ist mittels eines Blechhalters axial fest dem Achszapfen aufgenommen.

### Aufgabe der Erfindung

Aufgebe der Erfindung ist daher, eine Lagerbaugruppe vorzuschlagen, bei der der Innenring in einfacher Weise verdrehgesichert ist und das Sensorelement zentriert an dem Achszapfen aufgenommen ist.

### Beschreibung der Erfindung

Die Aufgabe wird durch den Gegenstand des Anspruchs 1 gelöst. Die von diesem abhängigen Unteransprüche geben vorteilhafte Ausführungsformen wieder.

Die vorgeschlagene Lagerbaugruppe zur Lagerung eines drehenden Bauteils, beispielsweise eines Rades insbesondere an einem Kraftfahrzeug, enthält einen Achszapfen, ein einen fest angeordneten Innenring und einen mit einer Drehzahl wie Raddrehzahl drehenden Außenring enthaltendes Radlager und ein Sensorelement, wobei das Sensorelement und der Innenring des Lagers wie Radlagers auf dem Achszapfen aufgenommen sind, das Sensorelement verdrehgesichert an dem Achszapfen und der Innenring gegenüber dem Sensorelement verdrehgesichert aufgenommen ist.

Die vorgeschlagene Lagerbaugruppe eignet sich insbesondere für Kraftfahrzeuge, beispielsweise Nutzfahrzeuge wie Lastkraftwagen, Schienenfahrzeuge und Omnibusse, aber auch für Personenkraftwagen sowie für nicht angetriebene Fahrzeuge wie Anhänger und stationäre Anwendungen, wobei unter Rad ein gegenüber einer feststehenden Achse mit dem Achszapfen rotierendes Bauteil zu verstehen ist.

Nach dem erfinderischen Gedanken ist das Sensorelement auf dem Achszapfen so angeordnet, dass eine das Verhalten des Radlagers charakterisierende Messgröße erfasst werden kann. Beispielsweise kann das Sensorelement den Abstand des Außenrings des Radlagers messen, so dass bei einer Erfassung von Abweichungen Radverluste und Defekte des Radlagers erkannt werden können. Erfindungsgemäß ist die Verwendung des Sensorelements als Drehzahlerfassungseinrichtung zur Erfassung der Drehzahl des Rades erwiesen. Hierbei erfasst das Sensorelement drehwinkelabhängige Signale, die beispielsweise von einem an dem Außenring angebrachten Geberring in dem Sensorelement erzeugt wie induziert werden. Dabei werden von dem Sensorelement zeitabhängig Winkelinkremente erfasst, die den Drehwinkel des Rades ergeben, wobei aus mathematischer Umformung und aus dessen Ableitungen nach der Zeit die Drehzahl, die Winkelgeschwindigkeit und Winkelbeschleunigung berechnet werden können.

Hierbei hat sich als vorteilhaft erwiesen, wenn das Sensorelement gegenüber dem Achszapfen exakt mittels der Verdrehsicherung positioniert wie zentriert ist, wobei die Befestigung des Sensorelements auf dem Achszapfen mittels einer oder mehrerer Schrauben erfolgen kann und die exakte Positionierung des Sensorelements gegenüber dem Achszapfen mittels der Verdrehsicherung erfolgt. Dabei kann das Sensorelement ein Trägerteil aufweisen, das sowohl mit dem Innenring als auch mit dem Achszapfen einen Formschluss in Umfangsrichtung bildet. Beispielsweise kann das Trägerteil aus Metall gefertigt sein und das Sensorelement aufnehmen. Zur Bildung der Verdrehsicherung beziehungsweise exakten Positionierung des Sensorelements sowohl gegenüber dem Innenring als auch gegenüber dem Achszapfen kann das Trägerteil jeweils zumindest eine radial erweiterte Nase aufweisen, die in zumindest eine komplementäre Ausnehmung des Innenrings beziehungsweise des Achszapfens eingreifen. Hierdurch positioniert das Trägerteil unter Ausbildung kurzer Toleranzketten das Sensorelement gegenüber dem Innenring und dem Achszapfen sowie den Achszapfen gegenüber dem Innenring. Ein zusätzliches Bauteil zur Verdrehsicherung des Innenrings gegenüber dem Achszapfen entfällt. Durch die Ausbildung einer radialen Ausnehmung werden die Belastungen des Innenrings gegenüber Anordnungen mit einer Ringnut am Innenring in Verbindung mit einem Keil oder dergleichen vermindert. Im Weiteren wird das Sensorelement mit hoher Positionstreue in Drehrichtung am Achszapfen positioniert, so dass die Winkelauflösung des Sensorelements als Drehzahlerfassungseinrichtung vergrößert und auf Lebensdauer gehalten werden kann, selbst wenn infolge von Vibrationen die toleranzbehaftete Schraubverbindung zwischen Sensorelement und Achszapfen Spiel zulassen würde.

Durch die direkte Kontaktierung des Sensorelements mit dem Radiallager, beispielsweise über das Trägerteil, kann eine einfache Datenübertragung über die Verdrehsicherung vom Sensorelement beziehungsweise weiteren stationären Auswerteeinheiten zu auf dem Radlager direkt angeordneten Elementen, beispielsweise weiteren Sensoren hergestellt werden. Infolgedessen kann an freien Bauräumen des Radlagers zumindest ein weiteres Sensorelement wie Sensor angeordnet sein, der auf dem Radlager weitere typische Messgrößen des Radlagers erfasst und über die Datenübertragung auf das Sensorelement, das für diesen zumindest einen Sensor die Auswerteeinheit bildet oder auf eine separate Auswerteeinheit überträgt.

In vorteilhafter Weise ist hierzu zwischen dem Trägerteil und dem Innenring eine elektromagnetische Schnittstelle eingerichtet, die im einfachsten Fall Daten von einem passiven Sensor über das Trägerteil überträgt. Zusätzlich kann ein aktiver Sensor mit Energie, beispielsweise elektrischer Energie versorgt werden und von der Auswerteeinheit gesteuert, beispielsweise kalibriert, parametrisiert und dergleichen werden. Hierzu kann eine Steckverbindung zwischen dem Trägerteil und dem Innenring dienen. Zum Schutz vor Korrosion und anderen schädlichen Einflüssen kann die Datenübertragung über die elektromagnetische Schnittstelle telemetrisch erfolgen. Zur Informationsübertragung und/oder Energieübertragung kann die elektromagnetische Schnittstelle zusätzlich oder alternativ optische, induktiv und/oder kapazitiv koppelnde Transmitterbauelemente aufweisen.

Der zumindest eine zusätzliche Sensor kann beispielsweise ein Temperatursensor, ein Beschleunigungssensor, ein Druckaufnehmer wie ein Piezoelement, ein Körperschallsensor und/oder dergleichen sein, so dass eine Überwachung des Radlagers auf mehreren Bereichen und daher umfassend erfolgen kann, so dass Radabwürfe, Lagerreibung, Lagerspiele, Lagertemperatur und dergleichen je nach Auslegung der Sensoren erfasst werden können.

Es hat sich beispielsweise als vorteilhaft erwiesen, wenn ein zusätzlicher Sensor in einer Ausnehmung des Innenrings zwischen Innenring und Achszapfen angeordnet ist. Dieser Sensor kann beispielsweise ein Temperaturfühler oder ein Druckaufnehmer sein. Alternativ oder zusätzlich kann ein Sensor auf dem Innenring axial zwischen Wälzkörpern des Radlagers und dem Sensorelement angeordnet sein. Dieser Sensor kann beispielsweise axial benachbart zum Geberring für das auf dem Achszapfen angeordnete Sensorelement sein, wobei der Verdrehwinkel des Geberrings von dem zusätzlichen Sensor nach einem anderen Messprinzip, beispielsweise optisch, ausgewertet werden kann, so dass durch Redundanz differentielle und einander überwachende Signale gewonnen werden können. Alternativ kann der Sensor für einen anderen Messparameter, beispielsweise Körperschall vorgesehen sein.

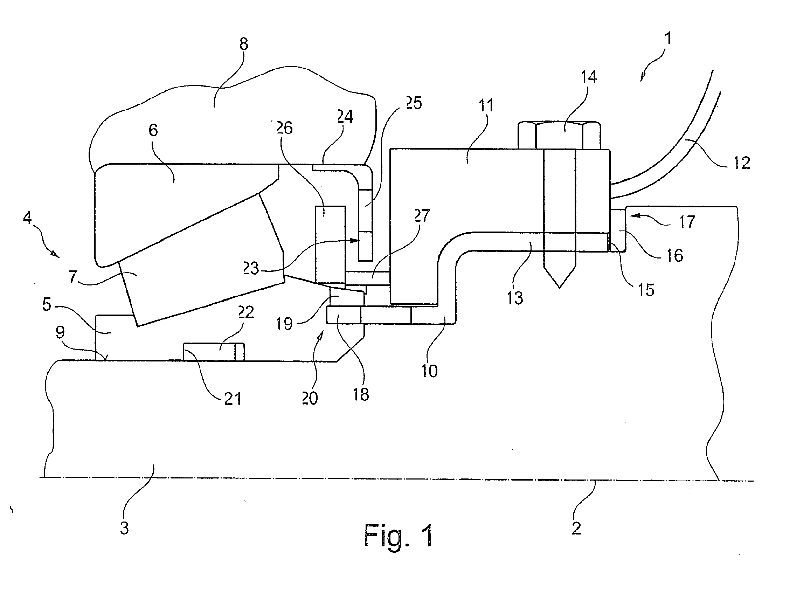

### Kurze Beschreibung der Zeichnung

Die Erfindung wird anhand der einzigen Figur näher erläutert. Diese zeigt einen Teilschnitt durch eine Lagerbaugruppe mit einem Radlager und einer gemeinsamen Verdrehsicherung des Sensorelements und des Innenrings des Radlagers gegenüber einem Achszapfen.

### Ausführliche Beschreibung der Zeichnung

Die Figur zeigt im Teilschnitt die um die Drehachse 2 angeordnete Lagerbaugruppe 1, wobei der Achszapfen 3 fest angeordnet ist und auf dem Achszapfen 3 das Radlager 4 mit dem fest auf dem Achszapfen 3 angeordneten Innenring 5 und dem den Lagerflansch 8 zur Befestigung des Rads aufnehmenden Außenring 6 sowie zwischen diesen abwälzenden Wälzkörpern 7 aufgenommen ist.

Auf dem stufenförmig ausgebildeten Achszapfen 3 ist auf der radial gegenüber der Aufnahmefläche 9 für den Innenring 5 erweiterten Doppelstufe 10 das Sensorelement 11 aufgenommen. Das Sensorelement 11 mit der elektrischen Ableitung 12 ist auf dem Trägerteil 13 angeordnet und zusammen mit diesem mittels der Schraube 14 mit dem Achszapfen 3 verschraubt. Sensorelement 11 und Trägerteil 13 sind der Doppelstufe 10 angepasst. Das Sensorelement 11 kann auf dem Trägerteil 13 beispielsweise mittels Positioniervorrichtungen positioniert, mit diesem verbunden wie verschnappt, verklebt und/oder in anderer Weise verbunden sein. Alternativ kann das Trägerteil 13 Teil des Sensorelements 11 sein, indem dieses beispielsweise in das Gehäuse des Sensorelements integriert, beispielsweise in ein Gehäuse aus Kunststoff eingespritzt ist. Das Trägerteil 13 ist bevorzugt aus Metall gebildet, beispielsweise aus Blech geformt und weist eine Profilierung 15 auf, in die die zu dieser komplementär ausgebildete Gegenprofilierung 16 des Achszapfens 3 zur Bildung der Verdrehsicherung 17 axial eingelegt ist. Die Verdrehsicherung 17 ist bezüglich ihres Spiels so eng toleriert, dass eine exakte Positionierung zwischen Achszapfen 3 und Trägerteil 13 und daher zum Sensorelement 11 ausgebildet wird. An der gegenüberliegenden Seite weist das Trägerteil 13 die Profilierung 18 auf, die mit der komplementären Gegenprofilierung 19 des Innenrings 5 die Verdrehsicherung 20 ausbildet, so dass der Innenring 5 im Wesentlichen spielfrei gegenüber dem Achszapfen 3 und dem Sensorelement 11 positioniert ist. In dem gezeigten Ausführungsbeispiel ist das Sensorelement 11 als Drehzahlerfassungseinrichtung 23 ausgebildet, die als Inkrementsensor die über den Umfang des an dem Außenring 6 wirksam beziehungsweise an dem Lagerflansch 8 körperlich befestigten Geberrings 24 wechselnd angeordneten Gebermarkierungen 25, die aus durch Ausstanzungen gebildete Stege sein können, erfasst. Durch die gemessene Anzahl der sich an dem Sensorelement vorbeidrehenden Stege beziehungsweise der durch diese erzeugten Signalflanken eines Inkrementsensors kann der Verdrehwinkel des Lagerflansches 8 und damit des an diesem angeordneten Rades ermittelt werden. Bei Auswertung der Inkremente innerhalb einer vorgegebenen Zeiteinheit wie Taktrate und dergleichen sowie dessen Ableitungen kann die Drehzahl, die Winkelgeschwindigkeit und Winkelbeschleunigung bestimmt werden.

An dem Innenring 5 kann eine Ausnehmung 21 vorgesehen sein, in der ein weiterer Sensor 22, beispielsweise ein Temperaturfühler, ein Druckaufnehmer oder dergleichen aufgenommen ist.

Ein weiterer Sensor 26 kann im Bauraum axial zwischen den Wälzkörpern 7 und dem Sensorelement 11 beziehungsweise hinter dem Geberring 24 angeordnet werden, der im gezeigten Ausführungsbeispiel an dem Innenring befestigt ist. Die Ableitung der Signale und gegebenenfalls eine Energieversorgung der gegebenenfalls vorhandenen Sensoren 22, 26 erfolgt im Bereich der Verdrehsicherung 20 mittels der lediglich schematisch angedeuteten elektromagnetischen Schnittstelle 27, die eine Steckverbindung oder eine gegebenenfalls bidirektionale Sende- und Empfangseinheit sein kann, wobei eine Energieversorgung mittels einer kapazitiven und/oder induktiven Koppelung erfolgen kann.

### Bezugszeichenliste

- 1: Lagerbaugruppe
- 2: Drehachse
- 3: Achszapfen
- 4: Radlager
- 5: Innenring
- 6: Außenring
- 7: Wälzkörper
- 8: Lagerflansch
- 9: Aufnahmefläche
- 10: Doppelstufe
- 11: Sensorelement
- 12: Ableitung
- 13: Trägerteil
- 14: Schraube
- 15: Profilierung
- 16: Gegenprofilierung
- 17: Verdrehsicherung
- 18: Profilierung
- 19: Gegenprofilierung
- 20: Verdrehsicherung
- 21: Ausnehmung
- 22: Sensor
- 23: Drehzahlerfassungseinrichtung
- 24: Geberring
- 25: Gebermarkierung
- 26: Sensor
- 27: elektromagnetische Schnittstelle

## Patentansprüche

1. Lagerbaugruppe (1) zur Lagerung eines Rads an einem Kraftfahrzeug mit einem Achszapfen (3), mit einem einen fest gegenüber dem Achszapfen (3) angeordneten Innenring (5) und einem gegenüber diesem an einem Lagerflansch (8) verdrehbar angeordneten Außenring (6) enthaltenden Radlager (4) und einer Drehzahlerfassungseinrichtung (23) mit einem verdrehgesichert an dem Achszapfen (3) aufgenommenen Sensorelement (11) und einem an dem Lagerflansch aufgenommenen Geberring (24), **dadurch gekennzeichnet, dass** das Sensorelement (11) ein Trägerteil (13) aufweist, das sowohl mit dem Innenring (5) als auch mit dem Achszapfen (3) einen Formschluss in Umfangsrichtung bildet.

2. Lagerbaugruppe (1) nach Anspruch 1, **dadurch gekennzeichnet, dass** das Trägerteil (13) mittels jeweils zumindest einer radial erweiterten Profilierung (15, 18) in eine Gegenprofilierung (16, 19) des Innenrings (5) beziehungsweise des Achszapfens (3) eingreift.

3. Lagerbaugruppe (1) nach Anspruch 1 oder 2, **dadurch gekennzeichnet, dass** an dem Innenring (5) zumindest ein weiterer Sensor (22, 26) angeordnet ist.

4. Lagerbaugruppe (1) nach Anspruch 3, **dadurch gekennzeichnet, dass** zwischen dem Trägerteil (13) und dem Innenring (5) eine elektromagnetische Schnittstelle (27) zwischen dem zumindest einen weiteren Sensor (22, 26) und einer nicht rotierenden Auswerteeinheit vorgesehen ist.

5. Lagerbaugruppe (1) nach Anspruch 4, **dadurch gekennzeichnet, dass** die elektromagnetische Schnittstelle (27) eine Steckverbindung ist.

6. Lagerbaugruppe (1) nach Anspruch 4, **dadurch gekennzeichnet, dass** die elektromagnetische Schnittstelle (27) eine telemetrische und/oder induktive Schnittstelle ist.

7. Lagerbaugruppe (1) nach einem der Ansprüche 4 bis 6, **dadurch gekennzeichnet, dass** ein zusätzlicher Sensor (22) in einer Ausnehmung (21) des Innenrings (5) zwischen Innenring (5) und Achszapfen (3) angeordnet ist.

8. Lagerbaugruppe (1) nach einem der Ansprüche 4 bis 7, **dadurch gekennzeichnet, dass** ein weiterer Sensor (26) auf dem Innenring (5) axial zwischen Wälzkörpern (7) des Radlagers (4) und dem Sensorelement (11) angeordnet ist.

## Claims

1. Bearing assembly (1) for mounting a wheel on a motor vehicle, with an axial pin (3), with a wheel bearing (4) which contains an inner ring (5) arranged fixedly with respect to the axial pin (3) and an outer ring (6) arranged rotatably with respect to the said inner ring on a bearing flange (8), and with a rotational-speed detection device (23) having a sensor element (11) accommodated, protected against twisting, on the axial pin (3) and having a transmitter ring (24) accommodated on the bearing flange, **characterized in that** the sensor element (11) has a carrier part (13) which both with the inner ring (5) and with the axial pin (3) forms a positive connection in the circumferential direction.

2. Bearing assembly (1) according to Claim 1, **characterized in that** the carrier part (13) engages in each case by means of at least one radially widened profiling (15, 18) into a counterprofiling (16, 19) of the inner ring (5) or the axial pin (3).

3. Bearing assembly (1) according to Claim 1 or 2, **characterized in that** at least one further sensor (22, 26) is arranged on the inner ring (5).

4. Bearing assembly (1) according to Claim 3, **characterized in that** an electromagnetic interface (27) between the at least one further sensor (22, 26) and a non-rotating evaluation unit is provided between the carrier part (13) and the inner ring (5).

5. Bearing assembly (1) according to Claim 4, **characterized in that** the electromagnetic interface (27) is a plug connection.

6. Bearing assembly (1) according to Claim 4, **characterized in that** the electromagnetic interface (27) is a telemetric and/or inductive interface.

7. Bearing assembly (1) according to one of Claims 4 to 6, **characterized in that** an additional sensor (22) is arranged in a recess (21) of the inner ring (5) between the inner ring (5) and axial pin (3).

8. Bearing assembly (1) according to one of Claims 4 to 7, **characterized in that** a further sensor (26) is arranged on the inner ring (5) axially between rolling bodies (7) of the wheel bearing (4) and the sensor element (11).

## Revendications

1. Module de palier (1) pour supporter une roue au niveau d'un véhicule automobile comprenant un tourillon d'axe (3), comprenant un palier de roue (4) contenant une bague interne (5) disposée fixement par rapport au tourillon d'axe (3) et une bague externe (6) disposée de manière à pouvoir tourner par rapport à celle-ci au niveau d'un flasque de palier (8) et un dispositif de détection de vitesse de rotation (23) avec un élément de capteur (11) reçu de manière fixée en rotation au niveau du tourillon d'axe (3) et une bague de capteur (24) reçue au niveau du flasque de palier, **caractérisé en ce que** l'élément de capteur (11) présente une partie de support (13) qui, conjointement avec la bague interne (5) et avec le tourillon d'axe (3), forme un engagement par correspondance de forme dans la direction périphérique.

2. Module de palier (1) selon la revendication 1, **caractérisé en ce que** la partie de support (13) vient en prise au moyen d'au moins un profilage respectif élargi radialement (15, 18) dans un profilage conjugué (16, 19) de la bague interne (5), respectivement du tourillon d'axe (3).

3. Module de palier (1) selon la revendication 1 ou 2, **caractérisé en ce qu'**au moins un capteur supplémentaire (22, 26) est disposé sur la bague interne (5).

4. Module de palier (1) selon la revendication 3, **caractérisé en ce qu'**entre la partie de support (13) et la bague interne (5) est prévue une interface électromagnétique (27) entre l'au moins un capteur supplémentaire (22, 26) et une unité d'analyse non rotative.

5. Module de palier (1) selon la revendication 4, **caractérisé en ce que** l'interface électromagnétique (27) est une connexion par enfichage.

6. Module de palier (1) selon la revendication 4, **caractérisé en ce que** l'interface électromagnétique (27) est une interface télémétrique et/ou inductive.

7. Module de palier (1) selon l'une quelconque des revendications 4 à 6, **caractérisé en ce qu'**un capteur supplémentaire (22) est disposé dans un évidement (21) de la bague interne (5) entre la bague interne (5) et le tourillon d'axe (3).

8. Module de palier (1) selon l'une quelconque des revendications 4 à 7, **caractérisé en ce qu'**un capteur supplémentaire (26) est disposé sur la bague interne (5) axialement entre des corps de roulement (7) du palier de roue (4) et l'élément de capteur (11).
